(19) Europäisches Patentamt
European Patent Office
Office européen des brevets

(11) **EP 1 094 084 A1**

(12) **DEMANDE DE BREVET EUROPEEN**

(43) Date de publication:
**25.04.2001 Bulletin 2001/17**

(51) Int. Cl.[7]: **C08F 6/00**

(21) Numéro de dépôt: **00122540.8**

(22) Date de dépôt: **16.10.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **19.10.1999 FR 9913016**

(71) Demandeur: **Atofina**
**92800 Puteaux (FR)**

(72) Inventeurs:
• **Gancet, Christian**
  **64140 Lons (FR)**
• **Saint-Aguet, Pascale**
  **31470 Fonsorbes (FR)**
• **Basseguy, Régine**
  **31810 Venerque (FR)**
• **Bergel, Alain**
  **31500 Toulouse (FR)**

(54) **Elimination électrochimique des monomères résiduels dans les latex**

(57)     La présente invention est relative aux latex contenant un faible taux de composés organiques volatils. Elle décrit plus particulièrement une méthode électrochimique d'élimination de monomères résiduels dans les latex, basée sur la décomposition d'eau oxygénée catalysée par des ions métalliques régénérés par une méthode électrochimique.

Figure 3
Electrode de Carbone vitreux
— Latex seul
---- Latex + Fe₂(SO₄)₃
-·-·- Latex + H₂O₂

Figure 4
Electrode d'or
— Latex seul
---- Latex + Fe₂(SO₄)₃
-·-·- Latex + H₂O₂

Figure 2
Electrode de Platine
— Latex seul
---- Latex + Fe₂(SO₄)₃
+-+-+ Latex + FeNH₄(SO₄)₂
-·-·- Latex + H₂O₂

EP 1 094 084 A1

## Description

La présente invention se rapporte au domaine des latex obtenus par polymérisation radicalaire. Elle est relative en particulier à une méthode d'élimination de monomères résiduels dans les latex, et plus particulièrement à une méthode d'élimination basée sur la décomposition d'eau oxygénée catalysée par des ions métalliques régénérés par une méthode électrochimique.

La préparation d'un grand nombre de polymères est basée sur le procédé bien connu de polymérisation radicalaire. Il s'agit de la polymérisation d'au moins un monomère ayant une double liaison oléfinique, préalablement dispersé dans un milieu adéquat en présence d'un générateur de radicaux libres tel que les peroxydes (y compris les persulfates) ou les composés azoïques. Le milieu peut être le monomère lui-même, un solvant organique ou l'eau, on parle alors de polymérisation en masse, en solution, en suspension ou en émulsion. Le produit obtenu par la polymérisation en émulsion dans l'eau est généralement désigné par latex.

La décomposition et la formation des radicaux peuvent se faire par différentes voies telles que thermique ou photochimique.

D'une manière générale la polymérisation n'est pas totale, le polymère formé contient souvent une quantité non négligeable de monomères résiduels. Ces produits volatils font partie de ce que l'on a appelé les composés organiques volatils désignés ci-après par C.O.V. et sont soumis de la part des utilisateurs à des limites de concentration. Ces spécifications, variables selon les produits, leurs utilisations, la nature des monomères, et le pays concerné, ont tendance à devenir plus sévères, et justifient donc la recherche de procédés permettant de mieux les respecter.

Un traitement pour réduire le taux de monomères résiduels, déjà mis en oeuvre actuellement consiste à opérer une post-polymérisation sur le latex à l'aide d'un second système d'amorçage. Les résultats ne sont cependant pas toujours suffisants pour être au niveau des spécifications les plus dures. De plus, le second système d'amorçage entraîne la formation de nouveaux C.O.V. résiduels difficiles à éliminer.

Pour les monomères les plus volatils, il est également possible d'opérer un entraînement des COV du latex par un gaz inerte, mais ce type d'opération nécessite un investissement important pour modifier les unités existantes. De plus, le traitement est surtout efficace pour les monomères présents dans la phase liquide, et en surface des particules, mais l'est moins pour les monomères inclus dans les particules.

L'utilisation de systèmes entraînant une formation lente de peroxydes in situ est très intéressante, car le traitement peut intervenir sur des durées relativement longues au cours du stockage. C'est ainsi que EP 0521 620 propose l'utilisation de systèmes enzymatiques permettant la formation de l'eau oxygénée $H_2O_2$ in situ. Mais ces systèmes ne fonctionnent que dans des conditions de dilution incompatibles avec les procédés industriels de préparation de latex.

Le problème restant à résoudre et qui est à la base de la présente invention est : comment peut-on former de façon continue et en quantités suffisantes des radicaux capables d'amorcer la polymérisation des monomères résiduels dans un latex, par un procédé simple, économique et compatible avec un procédé industriel ?

La demanderesse a trouvé que la solution peut être apportée par les techniques électrochimiques appliquées aux latex. Malgré le fait que ces techniques connues en soi non jamais été utilisées dans les latex.

L'idée développée par la demanderesse consiste à introduire $H_2O_2$ en quantité convenable dans le latex à traiter, ainsi qu'une faible concentration en ions métalliques tels que $Fe^{2+}$. Ce système va permettre la formation d'espèces réactives de l'oxygène, qui vont entraîner la post-polymérisation des monomères résiduels. La difficulté de cette approche est liée au fait que le cycle d'oxydo-réduction implique la réduction de $Fe^{3+}$ vers $Fe^{2+}$ afin que celui-ci puisse à nouveau jouer son rôle, et que cette réduction est très lente dans les milieux latex.

A noter que dans certains cas, le rajout d'ions $Fe^{2+}$ n'est pas nécessaire, car les traces d'ions métalliques contenus dans les émulsions de latex sont suffisantes pour soutenir le processus de formation de radicaux libres.

Réactions mises en jeu:

$$H_2O_2 + Fe^{2+} \rightarrow HO^\circ + Fe^{3+}$$

$$RH + HO^\circ \rightarrow R^\circ + H_2O \text{ (RH désigne "monomère résiduel")}$$

$$R^\circ + RH \rightarrow \text{polymérisation}$$

$$Fe^{3+} + \text{réducteur} \rightarrow Fe^{2+} \text{ (réduction in situ de } Fe^{3+})$$

En l'absence d'espèces très réductrices, la réduction de $Fe^{3+}$ en $Fe^{2+}$ ne peut pas se faire et devient de ce fait limitante du procédé de l'invention.

L'idée à la base de l'invention consiste à rendre cette réduction beaucoup plus efficace par un traitement électrochimique en opérant la réduction de $Fe^{3+}$ vers $Fe^{2+}$ à la surface d'une cathode plongée au sein du latex. Les expériences, qui sont décrites ci-après, montrent que de façon inattendue, il est possible de faire de l'électrochimie dans les latex et de rendre la polymérisation par $Fe^{2+}/H_2O_2$ beaucoup plus efficace pour l'élimination des monomères résiduels.

L'objet de l'invention est donc un procédé d'élimination de monomères résiduels dans un latex par l'eau oxygénée, basée sur la décomposition d'eau oxygénée catalysée par des ions métalliques. Ceux-ci pouvant être présents dans le milieu en tant que résidus réactionnels, fraîchement apportés ou bien régénérés par un processus électrochimique.

Le procédé de l'invention peut être décrit de la manière suivante:

Dans une masse de latex de l'ordre de 100 g, ayant un taux de solide compris entre 10 et 60% constitué de particules de polymère de diamètre compris entre 50 et 1000 nm dans lequel sont ajoutés 0 à 1 millimole d'au moins un ion métallique et 1 à 40 millimole de $H_2O_2$, on plonge une électrode constituée d'un matériau conducteur adéquat, d'une surface de 5 à 50 $cm^2$, à laquelle on applique un potentiel adéquat par rapport à une électrode de référence classique, telle que l'électrode au calomel saturée. La suspension de latex est agitée en continu et le potentiel est appliqué tout au long du traitement, jusqu'à ce que des taux de monomère résiduel suffisamment faibles soient obtenus. Une durée de 200 à 400 heures suffit lorsque le latex contient une concentration initiale de monomère résiduel de 1000 à 3000 ppm. La gamme de potentiel optimale est choisie en fonction du matériau d'électrode comme explicité ci-dessus. Un potentiel de +0,15 à +0,35 V par rapport à l'électrode de référence au calomel saturée pour l'électrode d'or.

L'électrode peut être constituée de tout métal ne réagissant pas spontanément avec l'ion métallique, en particulier platine (Pt), or (Au), tungstène (W), le métal préféré selon l'invention est l'or.

L'ion métallique est choisi dans le groupe contenant $Fe^{2+}$, $Cu^{2+}$.

L'ion métallique préféré de l'invention est $Fe^{2+}$. Il est ajouté sous la forme de sulfate de fer.

### EXEMPLES

Les exemples suivants illustrent l'invention sans en limiter la portée.

Ci-après sont décrites les méthodes d'analyse utilisées pour les différents exemples.

### Dosage des monomères dans le latex

L'analyse des monomères par chromatographie gazeuse (GC) a exigé la mise au point d'un protocole de traitement des suspensions de latex. Le protocole est fixé comme suit : 0,65 à 0,75 g de latex sont dissous dans 3 ml de $CCl_4$. Une agitation vive pendant deux minutes suffit pour une extraction de l'acétate de vinyle qui est totale. L'émulsion est ensuite centrifugée 5 minutes à 4000 g et 780 µl de la phase organique sont récupérés et mélangés à 20 µl de solution d'isobutanol dans $CCl_4$ (0,2 g /25 ml de $CCl_4$) qui sert d'étalon interne. 1 µl est injecté en chromatographie (colonne diméthyl polysiloxane 530 µm, gaz vecteur He, détecteur FID alimenté par un mélange $H_2$-air).

Les pics de l'acétate de vinyle, de l'acrylate de butyle et de l'isobutanol (standard interne) sont facilement identifiables. La présence de t-butanol dans le latex est également observable. Lorsqu'ils sont tous deux présents dans l'échantillon, le styrène et l'acrylate de butyle donnent des pics très proches, mais tous les pics sont clairement identifiables.

La méthode a été étalonnée en supposant que les monomères sont totalement dissous dans les 3 ml de solvant. La quantité de monomère $QT_{mono}$ est alors déterminée en fonction de la quantité d'étalon interne $QT_{SI}$ et des aires mesurées des pics chromatographiques, ⟨Aire⟩, par la relation:

$$QT_{mono} = QT_{SI} \cdot FR \cdot Air\ mono / Aires_{SI}$$

où FR est le facteur de réponse du monomère. Les facteurs de réponse sont déterminés par étalonnage avec des quantités connues de chacun des monomères dilués dans $CCl_4$. Avec les dilutions successives utilisées ici, les teneurs en ppm sont données par l'équation:

$$PPM_{mono} = 10^6\ M_{si}/M_{latex} \cdot 20/25000 \cdot 3000/780 \cdot FR \cdot Aire_{mono}/Aire_{SI}$$

où Msi est la masse standard interne diluée dans l25 ml de CCL4 et $M_{latex}$ la masse de l'échantillon de latex.

### Dosage du peroxyde d'hydrogène

Le peroxyde est dosé par réaction avec l'ion permanganate:

$$2\ MnO_4^- + 5\ H_2O_2 + 6\ H^+ \rightarrow 2\ Mn^{2+} + 5\ O_2 + 8H_2O$$

Une quantité de l'ordre de 0,5 à 1 g de latex est diluée dans 20 ml d'acide sulfurique 1,0 M. Le dosage est effectué par potentiométrie, avec une solution de permanganate de potassium 0,02 M. Au point d'équivalence, la concentration de peroxyde est donnée par l'équation:

$$Moles/g = V_{KMn04} / M_{latex} \cdot 0,02 / 100 \cdot 5 / 2$$

où $V_{KMnO4}$ est le volume de solution de permanganate versée au point d'équivalence (en millilitres) et $M_{latex}$ la masse de l'échantillon de latex en grammes. Les concentrations de peroxyde sont données en mole par gramme de suspension de latex. Dans la suite du rapport, elles sont le plus souvent exprimées en mole de peroxyde pour 100 g de latex.

Exemple 1:

- Régénération spontanée de $Fe^{2+}$ en l'absence de traitement électrochimique (exemple comparatif).

Diverses quantités de $Fe^{2+}$ sont introduites sous forme $FeSO_4$, $7H_2O$ dans 49,2 g d'un latex EF16 (voir ci-après). Après homogénéisation, une quantité identique de $H_2O_2$ est injectée dans le latex, dont on suit la concentration au cours du temps. Le titrage de H2O2 est réalisé par potentiométrie, à l'aide de $KMnO_4$. Quelle que soit la quantité de fer introduite dans le latex, la concentration en $H_2O_2$ diminue rapidement dans un premier temps, pour atteindre une valeur seuil non nulle. Le peroxyde n'est donc pas consommé en totalité, et de plus, plus la concentration initiale en $Fe^{2+}$ est élevée, plus le seuil de concentration résiduelle en $H_2O_2$ s'abaisse.
On en déduit que dans un premier temps les ions $Fe^{2+}$ disponibles sont utilisés pour transformer le peroxyde d'hydrogène en radicaux. Mais la lenteur de la régénération de $Fe^{2+}$ par réduction de $Fe^{3+}$ limite rapidement le phénomène. Le fer se trouve alors essentiellement au degré d'oxydation III caractérisé par la coloration brune des latex en fin d'expérience.

Exemple 2 :

- Régénération de $Fe^{2+}$ par traitement électrochimique

Ces expériences sont réalisées avec un montage à 3 électrodes connecté à un potentiostat EG & G 262. L'électrode de travail sur laquelle est étudié le phénomène est soumise à un potentiel régulé par rapport à l'électrode de référence.
La 3ème électrode auxiliaire n'est utilisée que pour le passage du courant, et ne doit pas perturber les potentiels. Trois matériaux d'électrode de travail ont été utilisés : grille de platine, grille d'or et carbone vitreux.
L'électrode auxiliaire est constituée par un barreau de carbone vitreux. L'électrode de référence est une électrode au calomel saturé (ECS). Elle est placée dans un tube contenant une solution de citrate de sodium, prolongé par un capillaire de Luggin bouché par un gel Agar-Agar rendu conducteur par $NH_4Cl$.
Le potentiel est balayé à la vitesse constante de 50 mV/min., depuis le potentiel d'abandon vers des potentiels plus cathodiques. L'apparition d'une réaction électrochimique à la surface de l'électrode de travail se traduit par l'apparition d'un courant.

2.1 Electrode de platine

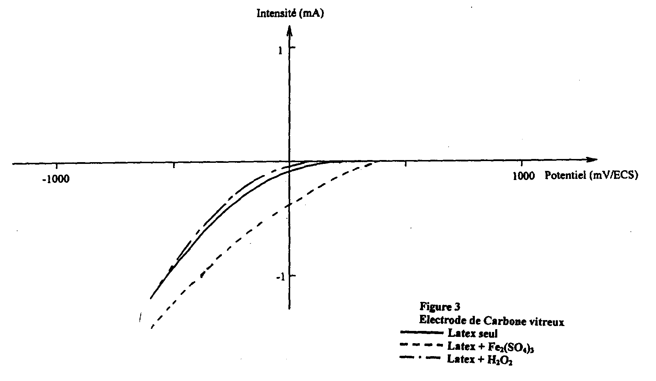

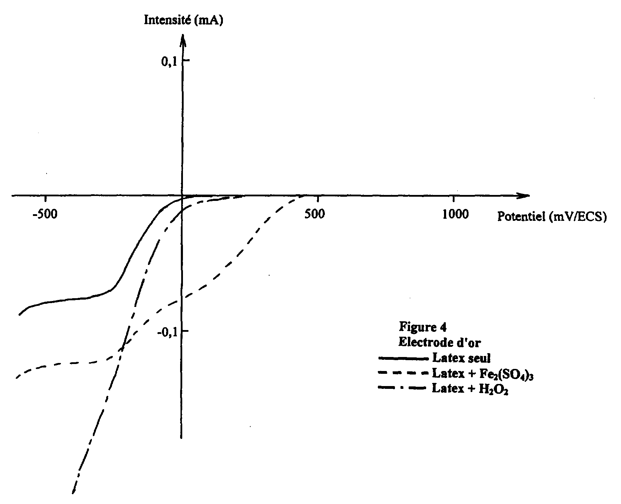

La courbe intensité-potentiel de la figure 1, obtenue sur platine en milieu latex seul, présente un pic de réduction vers -50 mV/ECS, qui est attribué à la réduction de $O_2$ présent dans le milieu.
Les modifications de la courbe avec l'ajout de $Fe^{3+}$ montrent que ce dernier se réduit avant $O_2$ c'est-à-dire qu'une vague de réduction apparaît à des potentiels plus élevés (augmentation du courant à partir de + 500 mV/ECS).
Par ailleurs, la réduction de $H_2O_2$ dans le latex commence à partir de +350 mV/ECS. Ces résultats indiquent qu'il est possible de régénérer $Fe^{2+}$ à partir de $Fe^{3+}$ en présence de $H_2O_2$ en se plaçant à un potentiel adapté, de l'ordre de +400 mV/ECS
En présence de $Fe^{3+}$, la courbe se modifie et indique que le fer se réduit à un potentiel plus élevé, c'est à dire avant $O_2$.
En présence de $H_2O_2$, il y a réduction de celle-ci à partir de +350 mV/ECS, ce qui indique qu'il est possible de régénérer $Fe^{3+}$ en $Fe^{2+}$ en présence de $H_2O_2$ en se plaçant à un potentiel compris entre 350 et 400 mV/ECS.

2.2 <u>Electrode de carbone</u>

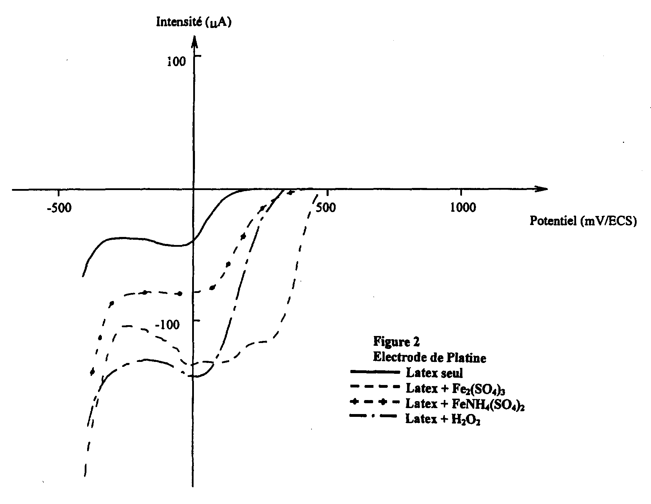

Sur carbone vitreux, aucune vague de réduction n'est observée quelle que soit la composition du milieu (figure 2). La variation de l'intensité en fonction du potentiel ne présente que des débuts d'exponentielle caractéristiques d'amorces de réaction. Cependant, en présence de $Fe^{3+}$, la courbe est déplacée vers les potentiels plus élevés, ce qui laisse envisager que, dans la zone de potentiels compris entre +230 et +380 mV/ECS, il est possible de réduire uniquement le fer. Toutefois, le rendement de réduction sera faible.

2.3 <u>Electrode d'or</u>

Les courbes de la figure 3 indiquent que la réduction des différentes espèces est bien définie. Dans le latex seul, le palier de réduction de $O_2$ est observé entre -250 et -550 mV/ECS. En présence de $Fe^{3+}$, 2 vagues apparaissent : l'une correspondant au fer, à partir de +450 mV/ECS, l'autre à la réduction de $O_2$. En présence de $H_2O_2$, l'augmentation exponentielle du courant caractéristique de sa réduction débute à 220 mV/ECS. Une électrolyse à ce potentiel, ou à un potentiel légèrement supérieur permettra donc une bonne régénération de $Fe^{2+}$, sans réduction de $H_2O_2$.

<u>Exemple 3</u> : Traitement des latex

Les conditions des essais sont les suivantes:

Latex EF16: 50 g
Sulfate ferreux ($FeSO_4$, $7H_2O$): 3, 5 ml d'une solution à 10 mg/ml
Peroxyde d'hydrogène 2 ml d'une solution 9,7 M

En l'absence de $H_2O_2$, ou de $FeSO_4$, une quantité équivalente d'eau distillée est ajoutée afin de conserver les mêmes dilutions. Les essais d'électrochimie sont effectués avec une grille d'or de 30 cm2.
VAc désigne l'acétate de vinyle.

3.1 : <u>Témoin sans $H_2O_2$, ni traitement électrochimique</u>

EF 16 : 50g
$Fe^{2+}$ ajouté : 0,125 mmoles.
Pas de $H_2O_2$

| Temps, h | 0 | 165 | 330 |
|---|---|---|---|
| VAc, ppm | 1487 | 1482 | 1347 |

3.2 <u>Essai avec $H_2O_2$ mais sans traitement électrochimique.</u>

EF 16 : 50g.
$Fe^{2+}$ ajouté : 0,125 m moles.
$H_2O_2$ : 19,4 mmoles

Les conditions sont identiques à celles de l'expérience précédente

| Temps, h | 0 | 165 | 310 |
|---|---|---|---|
| VAc, ppm | 1491 | 776 | 776 |
| Sans électrochimie | | | |
| Avec électrochimie 0 ,25 V/ECS VAc, ppm | 1491 | 273 | 48 |

3.3.1 : <u>Essai avec $H_2O_2$, avec traitement électrochimique</u>

EF 16 : 50g
$Fe^{2+}$ ajouté : 0
$H_2O_2$ : 19,4 mmoles

Les conditions sont identiques à celles de l'expérience précédente:

| Temps, h | 0 | 72 | 215 | 360 |
|---|---|---|---|---|
| Témoin | 1176 | 1320 | 1246 | 987 |
| Sans électro. VAc, ppm | 1200 | 964 | 562 | 372 |
| Electrochimie 0,25 V/ECS VAc, ppm | 1200 | 620 | 204 | 108 |

3.3.2 idem 3.3.1 mais avec 38,8 mmoles de $H_2O_2$

| Temps, h | 0 | 72 | 120 | 168 | 240 |
|---|---|---|---|---|---|
| Electrochimie 0,25 V/ECS VAc, ppm | 1474 | 811 | 351 | 137 | 30 |

3.4 Essai sur une durée plus importante. De plus, on part d'une concentration plus importante en acétate de vinyle.

EF 16 : 100g
$Fe^{2+}$ ajouté : 0,250 mmoles
$H_2O_2$ : 9 mmoles

| Temps, h | 0 | 19 | 50 | 213 | 357 |
|---|---|---|---|---|---|
| Sans électro. VAc, ppm | 1275 | 1078 | 1171 | 30 | 859 |
| Electrochimie 0,2 V/ECS VAc, ppm | 1275 | 881 | 493 | 30 | 30 |

## Revendications

1. Réduction du taux des monomères résiduels dans un latex constitué de 10 à 60% en poids de particules de polymères de diamètres compris entre 50 et 1000 nm ayant un taux de monomères résiduels compris entre 500 et 3000 ppm, par un procédé renfermant les étapes suivantes:

      a - on introduit dans ledit latex de 0 à 10 millimoles par rapport à 100 g de latex, d'au moins un ion métallique oxydable,
      b - on introduit dans ledit latex de 1 à 50 millimoles par rapport à 100 g de latex, d'eau oxygénée,
      c - on plonge dans ledit latex une électrode métallique de section comprise entre 5 et 50 $cm^2$ et on applique un potentiel compris entre 0,1 et 0,4 volt par rapport à une électrode de référence au calomel saturée jusqu'à l'obtention d'un taux de monomères résiduels satisfaisant.

2. Procédé selon la revendication 1 caractérisé en ce que l'ion métallique oxydable est choisi dans le groupe contenant $Cu^{2+}$, $Fe^{2+}$

3. Procédé selon la revendication 2 caractérisé en ce que l'ion métallique est $Fe^{2+}$

4. Procédé selon l'une quelconque des revendications précédentes caractérisé en ce que l'électrode renferme au moins un métal choisi parmi le platine, l'or, le tungstène.

5. Procédé selon la revendication 4 caractérisé en ce que l'électrode est en or.

6. Procédé selon la revendication 5 caractérisé en ce que le potentiel appliqué est 0,35 volt par rapport à une électrode de référence au calomel saturée.

Figure 3
Electrode de Carbone vitreux
——————— Latex seul
— — — — Latex + Fe₂(SO₄)₃
— · — Latex + H₂O₂

Intensité (mA)

Potentiel (mV/ECS)

0,1

1000

500

-0,1

-500

Figure 4
Electrode d'or
—— Latex seul
- - - Latex + Fe$_2$(SO$_4$)$_3$
—·— Latex + H$_2$O$_2$

Figure 2
Electrode de Platine
Latex seul
Latex + $Fe_2(SO_4)_3$
Latex + $FeNH_4(SO_4)_2$
Latex + $H_2O_2$

**Office européen des brevets**

**RAPPORT DE RECHERCHE EUROPEENNE**

Numéro de la demande

EP 00 12 2540

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | DE 197 41 185 A (BASF AG) 25 mars 1999 (1999-03-25) * abrégé; revendications * | 1-6 | C08F6/00 |
| Y | EP 0 084 244 A (STANDARD OIL CO OHIO) 27 juillet 1983 (1983-07-27) * abrégé; revendications; exemples * | 1-6 | |
| Y | US 3 573 180 A (HODES HARVEY A ET AL) 30 mars 1971 (1971-03-30) * abrégé; revendications; exemple 3 * | 1-6 | |

DOMAINES TECHNIQUES RECHERCHES (Int.Cl.7)

C08F

Le présent rapport a été établi pour toutes les revendications

| Lieu de la recherche | Date d'achèvement de la recherche | Examinateur |
|---|---|---|
| LA HAYE | 31 janvier 2001 | Mettler, R-M |

**ANNEXE AU RAPPORT DE RECHERCHE EUROPEENNE
RELATIF A LA DEMANDE DE BREVET EUROPEEN NO.**   EP 00 12 2540

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-01-2001

| Document brevet cité au rapport de recherche | Date de publication | Membre(s) de la famille de brevet(s) | Date de publication |
|---|---|---|---|
| DE 19741185 A | 25-03-1999 | AUCUN | |
| EP 0084244 A | 27-07-1983 | US 4411745 A<br>CA 1215936 A<br>DE 3272221 D<br>JP 58120606 A | 25-10-1983<br>30-12-1986<br>28-08-1986<br>18-07-1983 |
| US 3573180 A | 30-03-1971 | AUCUN | |